Europäisches Patentamt

European Patent Office

Office européen des brevets

(11) Veröffentlichungsnummer: **0 054 885**
**A2**

(12) **EUROPÄISCHE PATENTANMELDUNG**

(21) Anmeldenummer: **81110442.1**

(22) Anmeldetag: **15.12.81**

(51) Int. Cl.³: **B 23 D 61/14**

(30) Priorität: **24.12.80 DE 3049018**

(43) Veröffentlichungstag der Anmeldung: **30.06.82**
**Patentblatt 82/26**

(84) Benannte Vertragsstaaten: **FR GB IT**

(71) Anmelder: **Höptner, Gerd, Brüderstrasse 69,**
**D-5630 Remscheid (DE)**
Anmelder: **Höptner, Hans-Gerd, Dr., Güldenwerth 629,**
**D-5630 Remscheid (DE)**

(72) Erfinder: **Höptner, Gerd, Brüderstrasse 69,**
**D-5630 Remscheid (DE)**
Erfinder: **Höptner, Hans-Gerd, Dr., Güldenwerth 629,**
**D-5630 Remscheid (DE)**

(74) Vertreter: **Peerbooms, Rudolf, Dipl.-Phys.,**
**Postfach 200 208 Dickmannstrasse 45C,**
**D-5600 Wuppertal 2 (DE)**

(54) **Mit Hartmetallplatten bestücktes Bandsägeblatt.**

(57) Ein mit Hartmetall bestücktes Bandsägeblatt (5) soll derart ausgebildet werden, dass es sich durch hohe Standzeit und hohe zulässige Schnittgeschwindigkeiten auszeichnet und insbesondere auch zum Schneiden sehr harter Materialien wie Metall oder Steine eingesetzt werden kann.

Hierzu ist erfindungsgemäss vorgesehen, dass das Bandsägeblatt (5) ungeschränkt ist und dass die Hartmetallplatten (6, 7) an zur Sägeblatt-Längserstreckung senkrechten oder nur leicht nach vorne geneigten Sitzflächen (12) befestigt sind, eine Höhe zwischen 1/3 bis 4/5 der Zahnhöhe aufweisen und beidseits mit hinterschliffenen Freischnitt-Verbreiterungen (8, 9) über die Sägeblattstärke vorstehen.

**Patentanwalt**

# Dipl.-Phys. Rudolf Peerbooms

Dickmannstraße 45c · Ruf (02 02) 55 61 47

**5600 Wuppertal-Barmen**

3209/EPÜ                     Pee/W

**0054885**

Patentanmeldung

Anmelder : Gerd Höptner

5630 Remscheid

und

Dr. Hans-Gerd Höptner

5630 Remscheid

Mit Hartmetallplatten bestücktes Bandsägeblatt

Die Erfindung betrifft ein mit Hartmetallplatten bestücktes Bandsägeblatt, insbesondere für Bandsägemaschinen.

Mit Hartmetallplatten bestückte Kreissägeblätter sind in zahlreichen Ausführungsarten bekannt. Die Hartmetallbestückung ermöglicht es, sehr harte Materialien wie Metalle und Stein zu zertrennen, verlängert, insbesondere bei leicht zertrennbaren Materialien, die Standzeit und ermöglicht höhere Schnittgeschwindigkeiten.

Dagegen sind hartmetallbestückte Bandsägen äußerst selten und nur in einer Ausführungsform auf dem Markt erhältlich, bei der nur die äußersten Zahnspitzen aus kleinen dreieckigen Hartmetallplatten bestehen, die an einer um etwa 45° gegenüber der Längserstreckung des Sägeblattes geneigten Sitzfläche am Sägeblatt angeschweißt sind. Durch die kleine Ausbildung der Hartmetallspitzen sollen einerseits die aus den stark unterschiedlichen Temperaturausdehnungskoeffizienten von Hartmetall und Sägeblattstahl resultierenden thermischen Spannungen gering gehalten werden und offenbar auch das ständige Abbiegen der Bandsägeblätter um eine Querachse bei ihrem Umlauf in Bandsägemaschinen berücksichtigt werden. Wegen der Kleinheit der Hartmetallplatten ist bei der bekannten Ausführungsform eine Schränkung der Zähne unumgänglich.

Die bekannte Ausführungsform hat jedoch entscheidende Nachteile. Denn die kleine, um etwa 45° rückwärts geneigte Sitzfläche gibt den angeschweißten Hartmetallspitzen, die beim Schweißvorgang den stärksten, etwa senkrecht zur Zahnbrust wirkenden Kräften widerstehen müssen, keinen ausreichenden Halt am Stammblatt, weshalb bei Überlastung die Gefahr des Ausbrechens der Hartmetallspitzen gegeben ist, was die Standzeit des Blattes erheblich reduziert.

0054885

Denn ein einzelnes so verlorengegangenes und im Schneidgut hängengebliebenes Hartmetallteil reißt häufig auch
einen Teil der an den nachfolgenden Zähnen befestigten
Hartmetallteile aus ihrer Befestigung. Darüber hinaus
ist auch die Sitzfläche dort ungünstig im Hinblick auf
das sich ständig wiederholende Querabbiegen des umlaufenden
Bandsägeblattes bei Bandsägemaschinen orientiert und einer
ständigen Lockerungsbeanspruchung ausgesetzt. Ferner erweist sich auch die Schränkung des bekannten Bandsägeblattes insbesondere beim Schneiden von sehr hartem Material oder beim Übergang zu höheren Schnittgeschwindigkeiten als nachteilig, da das verhältnismäßig dünne
Stammblatt ständig abwechselnd von der ein oder anderen
Seite her Stöße erfährt, durch die Vibrationen, verbunden mit starken Pfeifgeräuschen, erzeugt werden,
weshalb man im allgemeinen die Schnittgeschwindigkeit
stark heruntersetzen muß, will man nicht die Standzeit,
die Qualität der Schnittfläche und die Lagerungen und
Führungen der Sägemaschinen beeinträchtigen.

Der Erfindung liegt die Aufgabe zugrunde, ein hartmetallbestücktes Bandsägeblatt zu schaffen, das sich durch hohe
Standzeit und hohe zulässige Schnittgeschwindigkeiten
auszeichnet und das insbesondere auch zum Schneiden sehr
harter Materialien wie Metall oder Steine eingesetzt werden
kann.

- 4 -

Zur Lösung dieser Aufgabe ist erfindungsgemäß vorgesehen, daß das Bandsägeblatt ungeschränkt ist und daß die Hartmetallplatten an zur Sägeblatt-Längserstreckung senkrechten oder nur leicht nach vorne geneigten Sitzflächen befestigt sind, eine Höhe zwischen 1/3 bis 4/5 der Zahnhöhe aufweisen und beidseits mit hinterschliffenen Freischnitt-Verbreiterungen über die Sägeblattstärke vorstehen.

Durch die Erfindung werden eine Reihe erheblicher Vorteile erreicht. Denn durch die senkrecht oder annähernd senkrechte Orientierung der Sitzflächen, bezogen auf die Längserstreckung des Sägeblattes, ist die Verbindungsstelle zwischen Hartmetallplatte und Stammsägeblatt beim Umlauf in einer Bandsäge-maschine keinen auf ein Lockern oder Aufbrechen der Verbindungsstelle gerichteten Biegekräften mehr unterworfen und können nunmehr sehr große Sitzflächen vorgesehen werden, die bis zu 4/5 der Zahnhöhe ausmachen können. Aufgrund dieser Orientierung der Sitzflächen finden die Hartmetallplatten auch eine optimale Abstützung für den aufzunehmenden Schneiddruck, da nunmehr keine Scherkräfte auf die Befestigungsstellen ausgeübt werden. Da das Bandsägeblatt der Erfindung zufolge ungeschränkt ist und der Freischnitt durch hinterschliffene Verbreiterungen der Hartmetallplatten erreicht ist, wird ein sehr ruhiger, vibrationsfreier Lauf des

0054885

Bandsägeblattes erreicht und sind aus Vibrationen.herrührende Querkräfte, die auf eine Lockerung der Hartmetallplatten hinwirken, nunmehr weitestgehend ausgeschlossen. Im Ergebnis ist ein Bandsägeblatt hoher Standzeit erreicht, mit dem auch sehr harte Materialien geschnitten werden können und das insbesondere bei weicheren Materialien auch ein Arbeiten mit sehr hohen Schnittgeschwindigkeiten ermöglicht.

In Weiterbildung der Erfindung kann vorgesehen werden, daß die Hartmetallplatten angelötet sind. Diese Maßnahme bringt den besonderen Vorteil, daß die thermischen Spannungen weitgehend in der Lotzwischenschicht aufgefangen werden, was sich gerade im Hinblick auf die Verwendung möglichst großer, langer Hartmetallplatten als Vorteil erweist. Darüber hinaus entstehen beim Löten im Vergleich zum Schweißen nur wesentlich geringere Spannungen, die leicht durch ein Nachwärmen abgebaut werden können.

In weiterer Ausgestaltung der Erfindung kann vorgesehen werden, daß die Sitzflächen für die Hartmetallplatten durch Aufstauchen verbreitert sind, wodurch der Halt der Hartmetallplatten am Sägeblatt verbessert wird.

er Erfindung zufolge sind die Hartmetallplatten zweckmäßigerweise abwechselnd als jeweils symmetrische Vor-
und Nachschneider ausgebildet, wodurch der Entstehung von
Vibrationen besonders wirkungsvoll vorgebeugt wird. Es
ist aber auch möglich, die Hartmetallplatten als abwechselnd an der einen oder an der anderen oberen Ecke abgefaste Wechselzähne auszubilden, wobei jedoch die Abfasung im Hinblick auf die Unterdrückung von Vibrationen
gering gehalten werden soll.

Die Erfindung wird im folgenden anhand der Zeichnung näher
erläutert, in der zeigen :

Figur 1 in einer perspektivischen Seitenansicht
        einen Zahn eines bekannten hartmetallbestückten Bandsägeblattes,

Figur 2 einen Teilquerschnitt durch das Sägeblatt
        nach Figur 1 zur Veranschaulichung der
        Schränkung,

Figur 3 einen Ausschnitt aus einem Bandsägeblatt
        nach der Erfindung in perspektivischer
        Seitenansicht,

Figur 4 und 5 Frontansichten auf die beiden in Figur 3
gezeigten Sägeblattzähne,

Figur 6 eine abgewandelte Ausführungsform eines
Zahnes,

Figur 7 eine Draufsicht auf einen Abschnitt des
Sägeblattes nach Figur 3,

Figur 8 und 9 in Frontansicht ein Paar von Wechselzähnen und

Figur 10 in Draufsicht einen Abschnitt eines Sägeblattes, dessen Stammblatt im Bereich
der Sitzflächen durch Stauchen verbreitert ist.

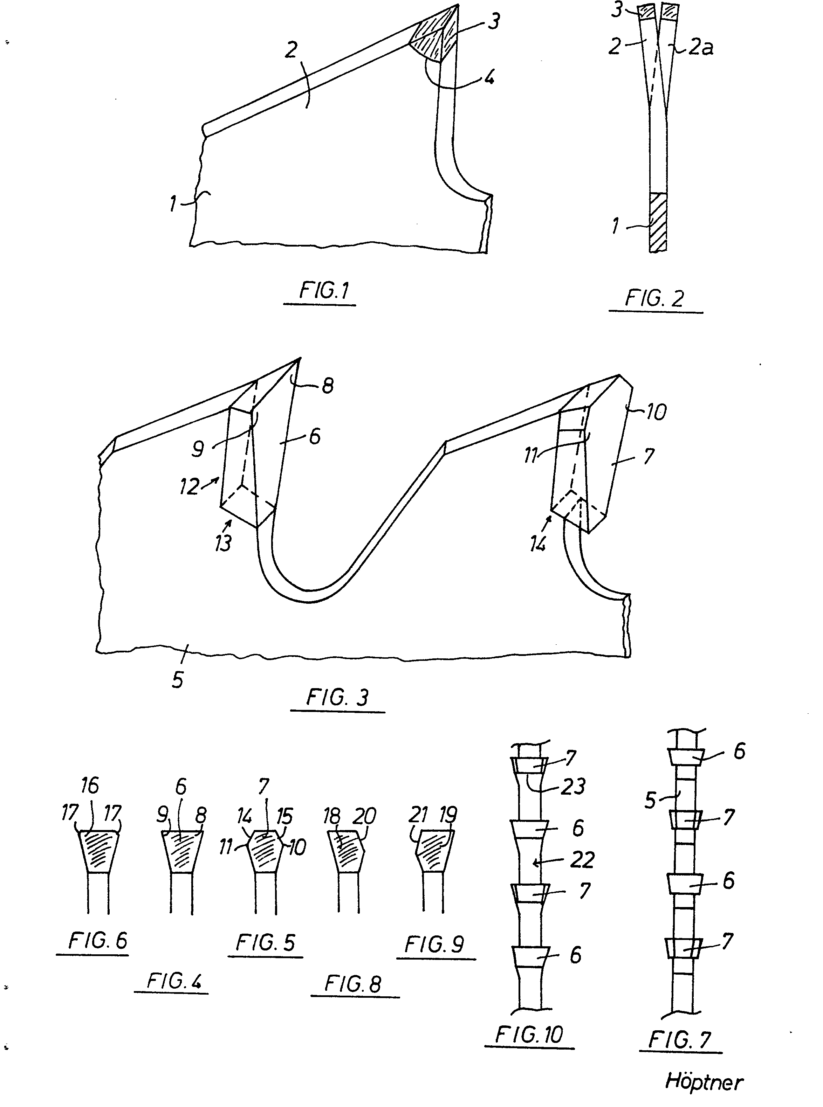

Fig. 1 zeigt einen Abschnitt eines bekannten Bandsägeblattes 1, dessen Zahn 2 an der Zahnspitze eine kleine
Hartmetallplatte 3 trägt, die an einer etwa um 45° gegenüber der Längserstreckung des Sägeblattes geneigten Sitzfläche 4 an das Stammblatt 1 bzw. dessen ausgestanzten
Zahn 2 angeschweißt ist. Wie insbesondere aus Fig. 2
ersichtlich ist, ist die Stärke der Hartmetallplatte 3
gleich der Stärke des Bandsägeblattes 1 und sind aufeinanderfolgende Zähne 2, 2a geschränkt.

Das in Fig. 3 gezeigte Sägeblatt 5 nach der Erfindung ist dagegen ungeschränkt und mit Hartmetallplatten 6, 7 bestückt, die beim Ausführungsbeispiel mehr als die halbe Zahnhöhe einnehmen und beidseits mit Freischnitt-Verbreiterungen 8, 9, 10, 11 über die Blattstärke vorstehen. Die Hartmetallplatten 6, 7 sind an eine nur sehr geringfügig nach vorne geneigte, im wesentlichen noch senkrecht zur Längserstreckung des Sägeblattes gerichtete Sitzfläche 12 angelötet. Darüber hinaus können die Hartmetallplatten 6, 7 auch an ihrer Unterseite 13 am Sägeblatt angelötet sein, jedoch sollte diese, im wesentlichen in Sägelängsrichtung verlaufende Fläche im Hinblick auf die Biegebeanspruchung des Sägeblattes nicht zu groß gewählt werden. Wie bei Hartmetallplatte 7 als alternative Ausführung gezeigt ist, können die Hartmetallplatten an der Unterseite auch nur auf einer kleinen Stufe 14 des Sägeblattes aufsitzen und im übrigen in die Zahnlücke hinein vorstehen.

Bei der Hartmetallplatte 6 handelt es sich um einen Nachschneiderzahn, vergl. auch Fig. 4, der in Frontansicht trapezförmig ist und dessen über die Sägeblattstärke vorstehende seitliche Verbreiterungen 8, 9 nach hinten und nach unten hin hinterschliffen sind. Demgegenüber handelt es sich bei der Hartmetallplatte 7 um einen Vorschneiderzahn, dessen beide oberen Verbreiterungen 10, 11 an den obersten Ecken mit Abfasungen 14, 15 versehen sind. Anstelle der Nachschneider-Hartmetallplatte 6 nach Fig. 4 kann auch die Nachschneider-Hartmetallplatte 16 gemäß Fig. 6 verwendet werden, deren obere Ecken 17 nur ganz geringfügig abgefast sind, wodurch eine besondere Laufruhe des Sägeblattes gewährleistet wird.

Fig. 7 zeigt in Draufsicht einen Abschnitt des Sägeblattes nach Fig. 3 mit abwechselnd aufeinander folgenden Hartmetallplatten 6, 7, die an ihren hinterschliffenen, an die Sitzflächen 12 angelöteten Enden noch immer deutlich breiter als die Sägeblattstärke sind.

Die Fig. 8 und 9 zeigen ein Paar von Wechselzähnen 18, 19, die jeweils nur an einer oberen Ecke eine Abfasung 20, 21 aufweisen,und die beide Nachschneider darstellen, die mit oder auch ohne Vorschneider laufen können.

Fig. 10 zeigt schließlich in Draufsicht eine weitere Ausführungsform eines mit den Hartmetallplatten 6, 7 bestückten Sägeblattes 22, das an den Sitzflächen 23 jeweils auf die Breite der Hartmetallplatten 6, 7 aufgestaucht ist.

**Patentanwalt**
**Dipl.-Phys. Rudolf Peerbooms**
Dickmannstraße 45c · Ruf (02 02) 55 61 47
**5600 Wuppertal-Barmen**

- 10 -

0054885
3209/EPÜ    Pee/W

Patentansprüche

1. Mit Hartmetallplatten bestücktes Bandsägeblatt insbesondere für Bandsägemaschinen, dadurch gekennzeichnet, daß das Bandsägeblatt ( 5 ) ungeschränkt ist und daß die Hartmetallplatten ( 6, 7 ) an zur Sägeblattlängserstreckung senkrechten oder nur leicht nach vorne geneigten Sitzflächen ( 12 ) befestigt sind, eine Höhe zwischen 1/3 bis 4/5 der Zahnhöhe aufweisen und beidseits mit hinterschliffenen Freischnitt-Verbreiterungen ( 8, 9 ) über die Sägeblattstärke vorstehen.

2. Bandsägeblatt nach Anspruch 1, dadurch gekennzeichnet, daß die Hartmetallplatten ( 6, 7 ) angelötet sind.

3. Bandsägeblatt nach den Ansprüchen 1 oder 2, dadurch gekennzeichnet, daß die Sitzflächen ( 23 ) für die Hartmetallplatten ( 6, 7 ) durch Aufstauchen des Sägeblattes verbreitert sind.

0054885

4. Bandsägeblatt nach einem oder mehreren der Ansprüche 1 bis 3, dadurch gekennzeichnet, daß die Hartmetallplatten ( 6, 7, 16 ) abwechselnd als jeweils symmetrische Vor- oder Nachschneider ausgebildet sind.

5. Bandsägeblatt nach einem oder mehreren der Ansprüche 1 bis 3, dadurch gekennzeichnet, daß die Hartmetallplatten als abwechselnd an der einen oder an der anderen oberen Ecke abgefaste Wechselzähne ( 18, 19 ) ausgebildet sind.

0054885

FIG.1

FIG. 2

FIG. 3

FIG. 6

FIG. 5

FIG. 9

FIG.4

FIG. 8

FIG.10

FIG. 7

Höptner